(19) Europäisches Patentamt
European Patent Office
Office européen des brevets

(11) EP 4 604 252 A1

(12) # EUROPEAN PATENT APPLICATION
published in accordance with Art. 153(4) EPC

(43) Date of publication:
**20.08.2025 Bulletin 2025/34**

(21) Application number: **23929470.5**

(22) Date of filing: **31.03.2023**

(51) International Patent Classification (IPC):
***H01M 10/0567*** *(2010.01)*

(52) Cooperative Patent Classification (CPC):
**H01M 10/0567;** Y02E 60/10

(86) International application number:
**PCT/CN2023/085672**

(87) International publication number:
**WO 2024/197887 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
- **XU, Ningbo**
  **Ningde, Fujian 352100 (CN)**
- **LIU, Jing**
  **Ningde, Fujian 352100 (CN)**
- **CHEN, Peipei**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **SECONDARY BATTERY AND ELECTRIC DEVICE**

(57) The present application provides a secondary battery. The secondary battery comprises: a negative electrode sheet and an electrolyte; the negative electrode sheet comprises a silicon-carbon composite material having a three-dimensional network cross-linked pore structure; the electrolyte comprises a first component, and the first component comprises a cyclic functional group containing a sulfate or sulfonate group. By means of coordination between the three-dimensional network cross-linked pore structure of the silicon-carbon composite material and the first component in the electrolyte, the volume effect of an active material in a charging-discharging process is inhibited, the interface stability is improved, and a cycle capacity retention rate and a high-temperature storage capacity retention rate of the battery are improved.

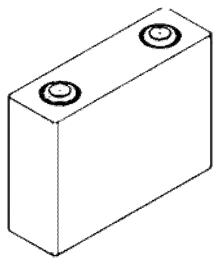


FIG. 1



Processed by Luminess, 75001 PARIS (FR)

## Description

TECHNICAL FIELD

The present application relates to the field of secondary battery technologies, and in particular, to a secondary battery, and an electric device.

BACKGROUND

Recently, a secondary battery is widely applied in an energy storage power system, such as a hydraulic, thermal, wind, or solar power plant, etc., and the fields of a power tool, an electric bicycle, an electric motorcycle, an electric vehicle, military equipment, aerospace, or the like.

Generally, an electrode active material having a high specific capacity enables poor cycle performance, and a technical problem needs to be solved in the art on how to improve a battery for an energy density and excellent cycle performance by interaction of its components.

SUMMARY

The present application is provided given the above-described subject, and aims to provide a secondary battery. The battery is improved for a cycle capacity retention rate and a storage capacity retention rate at high temperature by increasing interface stability by combining an electrolyte and a negative electrode material.

The first aspect of the present application provides a secondary battery characterized by including a negative electrode sheet including a silicon-carbon composite material having a three-dimensional-network cross-linked pore structure, and an electrolyte including a first component including a cyclic functional group containing a sulfate group or a sulfonate group.

The silicon-carbon composite material having a three-dimensional-network cross-linked pore structure has a stable porous skeleton, and a good mechanical strength, and can effectively reduce the volume change of silicon before and after charge and discharge while carrying a high content of silicon. At the same time, the first component in the electrolyte can participate in interface film formation to generate a sulfate-containing interface component and construct a stable electrolyte/electrode interface, increasing the chemical stability and thermal stability of the interface, and thereby increasing the cycle performance of the battery and improving the storage performance of the battery at high temperature.

In any embodiment, the first component comprises at least one compound of Formula I, Formula II, Formula III

$H\text{-}L_1$ Formula I

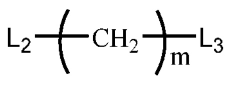 Formula II

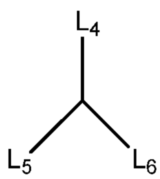 Formula I

wherein $L_1$ -$L_6$ each independently comprise

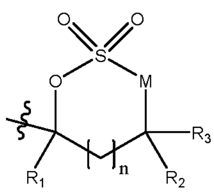,

m is any integer from 0 to 8, and when m is 0, $L_2$ and $L_3$ are linked by a single bond;

$R_1$, $R_2$, and $R_3$ each independently comprise at least one of H, F, fluorine-substituted or unsubstituted $C_1$ - $C_{10}$, a saturated or unsaturated hydrocarbon group, a $C_6$ - $C_{60}$ aryl group, a carbonyl group, a carboxyl group, an ester group, a cyano group, a silane group, and an ether group; m includes at least one of O and C, and n is any integer from 0 to 3.

In any embodiment, the first component comprises one or more of compound A-1 to compound A-10:

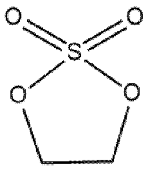
A-1
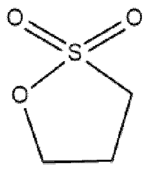
A-2
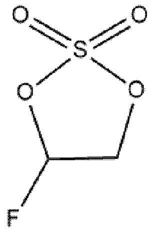
A-3
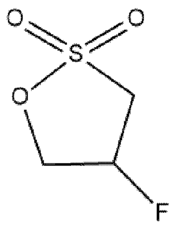
A-4

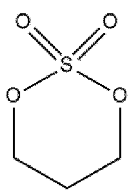
A-5
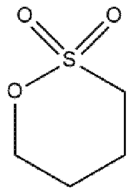
A-6
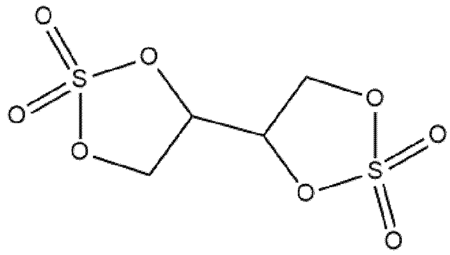
A-7

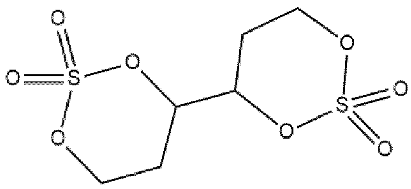
A-8
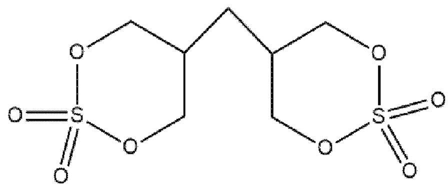
A-9

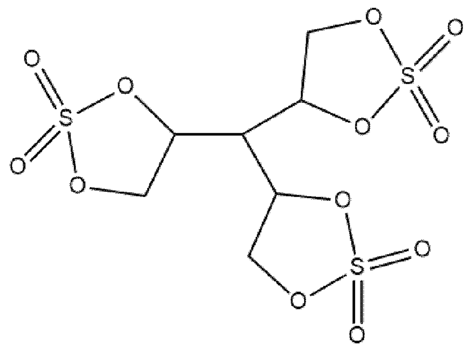
A-10.

The above compound A-1 to compound A-10 can participate in interface film formation to generate a sulfate-containing interface component, so as to increase the chemical stability and thermal stability of the interface, and construct a stable electrolyte/electrode interface, thereby increasing the cycle performance of the battery, and improving the batter for the storage performance at high temperature.

In any embodiment, the specific surface area of the silicon-carbon composite material is SSA $m^2/g$,

the mass ratio of the first component is EL g/g based on the total mass of the electrolyte, and

EL: SSA is 0.0001 - 0.03, preferably 0.0004 - 0.01.

When the ratio value EL: SSA of the mass ratio of the first component in the electrolyte to the specific surface area SSA of the silicon-carbon composite satisfies the above range, the first component can efficiently enter into the pore structure of the silicon-carbon composite and sufficiently contacts with the silicon-carbon composite material, increasing

the migration rate of ions at the electrode/electrolyte interface, decreasing the internal resistance of the battery, and increasing the cycle capacity retention rate of the battery.

In any embodiment, the mass ratio of the first component based on the total mass of the electrolyte is EL g/g, and the mass percentage content of the silicon element in the silicon-carbon composite material is B1 based on the total mass of the silicon-carbon composite material in the peripheral region of the silicon-carbon composite material, wherein the peripheral region of the silicon-carbon composite material is a region extending from the outer surface of the silicon-carbon composite material to the inside of the silicon-carbon composite material by a distance within r/2, r representing the short diameter of the silicon-carbon composite material, and

EL: B1 is 0.001 - 0.1, preferably 0.005 - 0.06.

When the ratio value of the mass ratio of the first component in the electrolytic solution to the mass percentage content B1 of the silicon element in the silicon-carbon composite material based on the total mass of the silicon-carbon composite material satisfies the above range, it is advantageous to alleviate volume expansion of silicon during charge and discharge, increasing the structural stability of the silicon-carbon composite material, and thereby increasing the cyclic stability of the battery.

In any embodiment, the total pore volume of pores having a pore diameter more than 100 nm in the silicon-carbon composite material is V1 $cm^3/g$, and the ratio value EL: V1 of the mass ratio EL of the first component in the electrolyte to the total pore volume V1 of pores having a pore diameter more than 100 nm in the silicon-carbon composite material is 1 - 30, optionally 2 - 15.

When the ratio value EL: V1 of the mass ratio EL of the first component in the electrolyte to the total pore volume V1 of pores having a pore diameter more than 100 nm in the silicon-carbon composite material satisfies the above range, the first component can be easily embedded into the pore structure of the silicon-carbon composite material, and combined therewith to further increase the migration rate of ions in the electrode active material, reducing the internal resistance of the battery, and increasing the cycle capacity retention rate of the battery.

In any embodiment, in the peripheral region of the silicon-carbon composite material, the mass percentage content A1 of the carbon element of the silicon-carbon composite material and the mass percentage content B1 of the silicon element of the silicon-carbon composite material satisfy $0.8 \leq B1/A1 \leq 2.5$, optionally, $1 \leq B1/A1 \leq 1.5$ based on the total mass of the silicon-carbon composite material.

In the peripheral region of the silicon-carbon composite material, when the mass percentage content A1 of the carbon element of the silicon-carbon composite material and the mass percentage content B1 of the silicon element of the silicon-carbon composite material satisfy the above ranges based on the total mass of the silicon-carbon composite material, the mass of silicon is relatively high in the pore structure of the silicon-carbon composite material, the capacity of the negative active material can be significantly increased, and the voltage for metal ion intercalation is relatively low to facilitate metal ion intercalation, thereby increasing the rate performance of the secondary battery. Further, the three-dimensional-network cross-linked pore structure may inhibit the volume expansion of silicon during cycling to increase the structural stability of the negative active material, thereby increasing the cycle performance of the battery.

In any embodiment, the mass percentage content A of the carbon element of the silicon-carbon composite material based on the total mass of the silicon-carbon composite material has a tendency to decrease in a direction from a geometric center of the silicon-carbon composite material toward an outer surface of the silicon-carbon composite material, and the mass percentage B of the silicon element of the silicon-carbon composite material based on the total mass of the silicon-carbon composite material has a tendency to increase in a direction from the geometric center of the silicon-carbon composite material toward the outer surface of the silicon-carbon composite material.

Since the silicon-carbon composite material may be a particle having an irregular shape, the geometric center of the silicon-carbon composite material may be identical to that of a cuboid tangent thereto. In the direction from the geometric center of the silicon-carbon composite material to the outer surface of the silicon-carbon composite material, the mass percentage content A of the carbon element gradually decreases, the mass percentage content B of the silicon element gradually increases, the silicon element content in the pore structure of the silicon-carbon composite material gradually increases, the content of silicon is relatively high, and the capacity of the negative active material can be significantly increased.

In any embodiment, the specific surface area SSA of the silicon-carbon composite material satisfies $2\ m^2/g \leq SSA \leq 10\ m^2/g$; optionally, $3\ m^2/g \leq SSA \leq 7\ m^2/g$.

When the specific surface area SSA of the silicon-carbon composite material satisfies the above range, the specific surface area of the silicon-carbon composite material is large, and the kinetic performance of the material is relatively good, facilitating to increase the initial coulombic efficiency of the battery.

In any embodiment, the silicon-carbon composite material comprises carbon substrate particles comprising a three-dimensional-network cross-linked pore structure and silicon nanoparticles, at least a part of which is disposed in the three-dimensional-network cross-linked pore structure.

When the silicon-carbon composite material of the present application is applied to a secondary battery, its cycle performance and energy density can be increased.

In any embodiment, the silicon nanoparticles comprise one or more of silicon oxide compounds, pre-lithiated silicon oxide compounds, amorphous silicon, crystalline silicon and silicon-carbon composites, optionally amorphous silicon.

In any embodiment, the carbon substrate comprises one or more of graphite, soft carbon, and hard carbon.

In any embodiment, the mass ratio of the silicon nanoparticles is 40% or more, optionally 40% - 60% in the silicon-carbon composite material.

The negative electrode material employed in the secondary battery of the present application realizes a high loading amount of silicon nanoparticles in the negative electrode material by using the carbon-based material having the three-dimensional-network cross-linked pore structure, so that the silicon-carbon composite material has a high capacity, which can further increase the energy density of the battery.

In any embodiment, the ratio value of powder compacted density P11 g/cm$^3$ tested for the powder of the silicon-carbon composite material after single powder pressing at a force of 20,000 N to powder compacted density P21 g/cm$^3$ tested for the powder of the silicon-carbon composite material after 20 times of powder pressing at a force of 20,000 N satisfies $1.00 < P21/P11 \leq 1.20$, optionally, $1.02 \leq P21/P11 \leq 1.10$.

When the ratio value of P21/P11 satisfies the above range, the silicon-carbon composite material has relatively good compression resistance while having a relatively high specific capacity to increase a structural stability of a negative electrode film layer, so that the secondary battery containing the material has relatively good cycle performance while having a relatively high energy density.

In any embodiment, the powder compacted density P11 g/cm$^3$ tested for the powder of the silicon-carbon composite material after single powder pressing at a force of 20,000 N satisfies $1.10 \leq P11 \leq 1.40$, optionally, $1.12 \leq P11 \leq 1.35$.

When the powder compacted density P11 g/cm$^3$ of the silicon-carbon composite material tested after single powder pressing at a force of 20000 N satisfies the above range, the negative electrode film layer has a relatively high compact density, so that the secondary battery has a relatively high energy density.

In any embodiment, the secondary battery comprises at least one of a lithium ion battery, a sodium ion battery, a magnesium ion battery, and a potassium ion battery.

The second aspect of the present application provides an electric device, including the secondary battery of the first aspect.

## DESCRIPTION OF DRAWINGS

FIG. 1 is a schematic diagram of a secondary battery according to an embodiment of the present application;

FIG. 2 is an exploded view of the secondary battery according to the embodiment of the present application shown in FIG. 1; and

FIG. 3 is a schematic diagram of an electric device using a secondary battery as a power source according to an embodiment of the present application.

Description of reference signs:
1-secondary battery; 11-housing; 12-electrode assembly; 13-cover plate

## DESCRIPTION OF EMBODIMENTS

Hereinafter, the embodiment disclosing the adhesive, preparation method, electrode, battery, and electrical device of the present application is described below in detail with reference to the figures as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit subject matters described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range

values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers in "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all embodiments and optional embodiments of this application may be combined with each other to form new technical solutions.

Unless otherwise specified, all technical features and optional technical features of this application can be combined with each other to form new technical solutions.

Unless otherwise specified, all steps in this application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "including" and "containing" as used herein are meant to be open or closed. For example, the "including" and "containing" may mean that other components not listed may be further included or contained, or only the listed components may be included or contained.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

As a secondary battery is applied more and more widely, requirements for its performance, such as energy density, are gradually increasing. A silicon-based material, due to its high specific capacity, is suitable as a negative electrode material of a battery having a high energy density. However, the silicon-based material has a large volume expansion rate during charge and discharge, resulting in poor cycle performance of a battery.

Given the above, the present application provides a secondary battery including a negative electrode sheet including a silicon-carbon composite material having a three-dimensional-network cross-linked pore structure, and an electrolyte including a first component including a cyclic functional group containing a sulfate group or a sulfonate group.

Herein, the three-dimensional-network cross-linked pore structure generally refers to a structure in which there are two or more pores which are communicated with each other or crisscrossed and share a pore volume in a silicon-carbon composite material, particularly in a pore structure formed by carbon substrate particles.

The pore structure of the silicon-carbon composite can be tested using equipment and methods known in the art. For example, it can be tested by using a scanning electron microscope (e.g., ZEISS Sigma 300). As an example, the testing can be made by steps below. First, a negative electrode sheet comprising the silicon-carbon composite material is cut into a sample to be tested of a certain size (for example, 6 mm $\times$ 6 mm), the sample to be tested is sandwiched by two electrically and thermally conductive sheets (for example, copper foil), the sample to be tested is fixedly adhered to the sheets by an adhesive (for example, a double-sided adhesive tape), pressing is performed by a flat iron block of a certain mass (for example, about 400 g) for a certain period of time (for example, 1 h) so that the gap between the sample to be tested and the copper foil is as small as possible, then the edge of the sample is trimmed by a pair of scissors, and the sample is adhered to a sample stage having an electrically conductive adhesive with the sample protruding slightly from the edge of the sample stage. The sample stage is then loaded into a sample holder and locked in place, a Cross Section Polisher (e.g., IB-19500CP) is powered on and evacuated (e.g., 10 Pa - 4 Pa) with an argon flow rate (e.g., 0.15 MPa) and a voltage (e.g., 8 KV) and polishing time (e.g., 2 h) which are set, the sample stage is set in a swing mode to begin polishing, and after polishing, an ion-polished cross-sectional topography (CP) image of the sample to be tested is obtained by a scanning electron microscope (e.g., ZEISS Sigma 300).

The silicon-carbon composite material having a three-dimensional-network cross-linked pore structure has a stable porous skeleton, and a good mechanical strength, and can effectively reduce the volume change of silicon before and after charge and discharge while carrying a high content of silicon. At the same time, the first component in the electrolyte can participate in interface film formation to generate a sulfate-containing interface component and construct a stable electrolyte/electrode interface, increasing the chemical stability and thermal stability of the interface, and thereby increasing the cycle performance of the battery and improving the storage performance of the battery at high temperature.

In some embodiments, the first component comprises a compound represented by Formula I, Formula II, or Formula III

$H\text{-}L_1$ Formula I

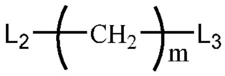
Formula II

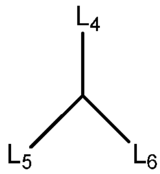
Formula III

wherein $L_1$ -$L_6$ each independently comprise

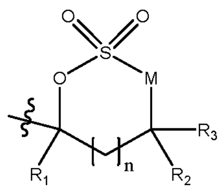
,

m is any integer from 0 to 8, and when m is 0, $L_2$ and $L_3$ are linked by a single bond;

$R_1$, $R_2$, and $R_3$ each independently comprise at least one of H, F, fluorine-substituted or unsubstituted $C_1$ - $C_{10}$, a saturated or unsaturated hydrocarbon group, a $C_6$ - $C_{60}$ aryl group, a carbonyl group, a carboxyl group, an ester group, a cyano group, a silane group, and an ether group; m includes at least one of O and C, and n is any integer from 0 to 3.

Herein, term "$C_1$- $C_{10}$ saturated or unsaturated hydrocarbon group" refers to a saturated or unsaturated hydrocarbon group having 1 to 10 carbon atoms. Non-limiting examples of $C_1$ - $C_{10}$ saturated or unsaturated hydrocarbon groups may include methyl ($CH_3$ -), ethyl ($C_2H_5$ -), isopropyl (($CH_3)_2CH$ -), vinyl ($CH_2=CH$ -), propynyl ($HC\equiv CCH_2$ -), and methylene (-$CH_2$-).

Herein, term "$C_6$ - $C_{60}$ aryl" refers to a monovalent radical of a carbocyclic aromatic system having 6 to 60 carbon atoms.

Herein, "carbonyl " refers to

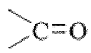
.

Herein, "carboxyl" refers to

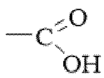
.

Herein, "ester group" refers to

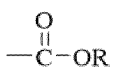

where R is $C_1$ -$C_3$ hydrocarbyl.

Herein, "cyano" refer to -C≡N.

Herein, term "silyl" refers to a -Si ($R_1$) ($R_2$) ($R_3$) group, where $R_1$, $R_2$, and $R_3$ are each independently selected from hydrogen, and substituted or unsubstituted $C_1$ -$C_3$ alkyl. As an example, silane groups include, but are not limited to, -$SiH_3$, and -Si ($CH_3)_3$.

Herein, "ether" refers to -R-O-R'-, where R and R' are $C_1$ -$C_3$ hydrocarbyl.

In some embodiments, the specific surface area of the silicon-carbon composite material is SSA $m^2$ / g, and the mass ratio of the first component is EL g/g based on the total mass of the electrolyte, and EL: SSA is 0.0001~0.03, optionally 0.0004~0.01.

In some embodiments, the specific surface area of the silicon-carbon composite is SSA $m^2$ / g, and the mass ratio

of the first component is EL g/g based on the total mass of the electrolyte, and EL: SSA may optionally be 0.0001, 0.0002, 0.0003, 0.0004, 0.0005, 0.0006, 0.0007, 0.0008, 0.0009, 0.001, 0.002, 0.003, 0.004, 0.005, 0.006, 0.007, 0.008, 0.009, 0.01, 0.015, 0.02, 0.025, or 0.03.

Herein, specific surface area SSA, having the meaning known in the art and generally in $m^2/g$, can be measured using a method known in the art. For example, with reference to GB/T 19587 2017, the specific surface area may be obtained by using a specific surface area testing method with inert gas (such as nitrogen) adsorption and using the BET (Brunauer Emmett Teller) method for calculation, wherein the specific surface area testing method with nitrogen adsorption may be performed by a Tri-Star 3020 Specific Surface Area Pore Size Analysis Tester from Micromeritics, USA.

When the ratio value EL: SSA of the mass ratio of the first component in the electrolyte to the specific surface area SSA of the silicon-carbon composite satisfies the above range, the first component can efficiently enter into the pore structure of the silicon-carbon composite and sufficiently contacts with the silicon-carbon composite material, increasing the migration rate of ions at the electrode/electrolyte interface, decreasing the internal resistance of the battery, and increasing the cycle capacity retention rate of the battery.

In some embodiments, the mass percentage of the first component in the electrolyte is EL g/g, and the mass percentage content of the silicon element is B1 in the silicon-carbon composite material based on the total mass of the silicon-carbon composite material, wherein the peripheral region of the silicon-carbon composite material is a region extending from the outer surface of the silicon-carbon composite material to the inside of the silicon-carbon composite material by a distance within r/2, r representing the short diameter of the silicon-carbon composite material, and EL: B1 is 0.001-0.1, optionally 0.005-0.06.

The particle diameter of the silicon-carbon composite material can be characterized by using a triaxial diameter characterization method, specifically as follows. Long diameter l and short diameter r are determined on a planar projection drawing for the silicon-carbon composite material, and thickness h of the silicon-carbon composite material in a direction perpendicular to the projection plane is determined; and it can also be understood that the silicon-carbon composite material is placed in a rectangular parallelepiped tangent thereto to enable long side l, short side r, and thickness h of the rectangular parallelepiped to reflect the actual size of the silicon-carbon composite material.

A silicon element content can be determined by emission spectrum testing (Inductively Coupled Plasma (ICP)), specifically as follows. The silicon-carbon composite material is taken as a sample, the sample is digested with aqua regia and HF, a solution digested for 15 min and a completely digested solution are taken for ICP testing, and the silicon content in a solution digested for 45 min is "the silicon content in the peripheral region of the silicon-carbon composite material".

In some embodiments, the ratio value EL: B1 of the mass ratio of the first component in the electrolyte to the mass percentage content B1 of the silicon element in the silicon-carbon composite material based on the total mass of the silicon-carbon composite material may optionally be 0.001, 0.002, 0.003, 0.004, 0.005, 0.006, 0.007, 0.008, 0.009, 0.01, 0.02, 0.03, 0.04, 0.05, 0.06, 0.07, 0.08, 0.09 or 0.1.

The silicon element in the peripheral region of the silicon-carbon composite material is less likely to be bound by the carbon skeleton than the silicon element in the inner region, and has more significant volume expansion. When the ratio value of the mass ratio of the first component in the electrolytic solution to the mass percentage content B1 of the silicon element in the silicon-carbon composite material based on the total mass of the silicon-carbon composite material satisfies the above range, it is advantageous to alleviate volume expansion of silicon during charge and discharge, increasing the structural stability of the silicon-carbon composite material, and thereby increasing the cyclic stability of the battery.

In some embodiments, the total pore volume of pores having a pore diameter more than 100 nm in the silicon-carbon composite is V1 $cm^3/g$, and the ratio value EL: V1 of the mass ratio EL of the first component in the electrolyte to the total pore volume V1 of pores having a pore diameter more than 100 nm in the silicon-carbon composite: is 1 - 30, preferably 2 - 15.

Reference can be made to GB/T 19587-2004 regarding the testing method for pore volumes of different-sized pores, mesopore size distribution testing BJH (Barret joyner Halenda) is used, testing is made by a gas adsorption/desorption method under a micro-mesoporous model, adsorption branch data is selected, and the sum V1 of the pore volumes of pores having a pore diameter more than 100 nm is determined and recorded.

In some embodiments, the ratio value EL: V1 of the mass ratio EL of the first component in the electrolyte to the total pore volume V1 of pores having a pore diameter greater than 100 nm in the silicon-carbon composite may optionally be 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30.

The first component easily enters the negative active material through the large pores. When the ratio value EL: V1 of the mass ratio EL of the first component in the electrolyte to the total pore volume V1 of pores having a pore diameter more than 100 nm in the silicon-carbon composite material satisfies the above range, the first component can be easily embedded into the pore structure of the silicon-carbon composite, and combined therewith to further increase the migration rate of ions in the electrode active material, reducing the internal resistance of the battery, and increasing the cycle capacity retention rate of the battery.

In some embodiments, in the peripheral region of the silicon-carbon composite material, the mass percentage

content A1 of the carbon element of the silicon-carbon composite material and the mass percentage content B1 of the silicon element of the silicon-carbon composite material satisfy 0.8 ≤B1/A1 ≤2.5, optionally, 1 ≤B1/A1 ≤1.5 based on the total mass of the silicon-carbon composite material.

The content of carbon element can be tested by carbon-sulfur content analysis by an infrared absorption method according to test standard GB/T 20123 - 2006, specifically as follows. The silicon-carbon composite material is taken as a sample, and the carbon content tested at 20 min is " the carbon content in the peripheral region of silicon-carbon composite material". In the peripheral region of the silicon-carbon composite material, when the mass percentage content A1 of the carbon element of the silicon-carbon composite material and the mass percentage content B1 of the silicon element of the silicon-carbon composite material satisfy the above ranges based on the total mass of the silicon-carbon composite material, the mass of silicon is relatively high in the pore structure of the silicon-carbon composite material, the capacity of the negative active material can be significantly increased, and the voltage for metal ion intercalation is relatively low to facilitate metal ion intercalation, thereby increasing the cycle performance of the secondary battery. Further, the three-dimensional-network cross-linked pore structure may inhibit the volume expansion of silicon during cycling to increase the structural stability of the negative active material, thereby increasing the cycle performance of the battery.

In some embodiments, the mass percentage content A of the carbon element of the silicon-carbon composite material based on the total mass of the silicon-carbon composite material has a tendency to decrease in a direction from a geometric center of the silicon-carbon composite material toward an outer surface of the silicon-carbon composite material, and the mass percentage B of the silicon element of the silicon-carbon composite material based on the total mass of the silicon-carbon composite material has a tendency to increase in a direction from the geometric center of the silicon-carbon composite material toward the outer surface of the silicon-carbon composite material.

Since the silicon-carbon composite material may be a particle having an irregular shape, the geometric center of the silicon-carbon composite material may be identical to that of a cuboid tangent thereto. In the direction from the geometric center of the silicon-carbon composite material to the outer surface of the silicon-carbon composite material, the mass percentage content A of the carbon element gradually decreases, the mass percentage content B of the silicon element gradually increases, the silicon element content in the pore structure of the silicon-carbon composite material gradually increases, the content of silicon is relatively high, and the capacity of the negative active material can be significantly increased. In addition, continuous increase of the silicon element content from an outer surface toward a center enables a more and more obvious effect of suppressing expansion of silicon element by a carbon material, thereby further increasing the cycle performance of the battery.

In some embodiments, the specific surface area SSA of the silicon-carbon composite material satisfies 2 $m^2/g \leq SSA \leq 10\ m^2/g$; optionally, 3 $m^2/g \leq SSA \leq 7\ m^2/g$.

In some embodiments, the specific surface area SSA of the silicon-carbon composite material may optionally be 2 $m^2/g$, 3 $m^2/g$, 4 $m^2/g$, 5 $m^2/g$, 6 $m^2/g$, 7 $m^2/g$, 8 $m^2/g$, 9 $m^2/g$ or 10 $m^2/g$, or any value in any range formed by the above numerical values.

When the specific surface area SSA of the silicon-carbon composite material satisfies the above range, the specific surface area of the silicon-carbon composite material is large, and the kinetic performance of the material is relatively good, facilitating to increase the initial coulombic efficiency of the battery.

In some embodiments, the silicon-carbon composite material comprises carbon substrate particles comprising a three-dimensional-network cross-linked pore structure and silicon nanoparticles, at least a part of which is disposed in the three-dimensional-network cross-linked pore structure.

The carbon substrate particles of the present application have a stable porous framework structure, a strong supporting ability exhibiting as a relatively high stress ability, and an excellent mechanical property and electrical conductivity; and the carbon substrate particles include the three-dimensional-network cross-linked pore structure, have a relatively large space for embedding silicon-based nanoparticles, and can be used to store a large amount of silicon, effectively increasing the loading amount of silicon in the silicon-carbon composite material. After the carbon substrate particles are composited with the silicon-based nanoparticles, the electrical conductivity of the silicon-carbon composite material may be increased, the volume effect of silicon during lithium de-intercalation is also alleviated, and the stress change of the silicon-based nanoparticles can be sufficiently tolerated to ensure the structural stability of the silicon-carbon composite material, increasing the cycle stability and the lithium storage capacity of the silicon-carbon composite material. Thus, when the silicon-carbon composite material is applied to a secondary battery, its cycle performance and energy density can be increased.

In some embodiments, the silicon nanoparticles comprise one or more of silicon oxide compounds, pre-lithiated silicon oxide compounds, amorphous silicon, crystalline silicon and silicon-carbon composites, optionally amorphous silicon.

In some embodiments, the carbon substrate comprises one or more of graphite, soft carbon, and hard carbon.

In some embodiments, the mass ratio of the silicon nanoparticles is 40% or more, optionally 40% - 60% in the silicon-carbon composite material.

In some embodiments, the mass ratio of the silicon nanoparticles may be selected to be 40%, 45%, 50%, 55%, or

60% in the silicon-carbon composite material.

The mass of the silicon nanoparticles in the silicon-carbon composite material may be determined using methods and equipment known in the art, for example, with reference to standard EPA 6010D-2014; and specifically, ICP-OES (Elemental Analysis-Inductively Coupled Plasma Emission Spectroscopy) may be used for testing, a solid to be tested is first dissolved in a strong acid to form a liquid, the liquid is then introduced into an ICP light source by atomization, and further gaseous atoms to be tested are ionized and excited in a strong magnetic field and then returns to a ground state from an excited state; and in the above process, energy is released and recorded as different characteristic spectrum lines to perform quantitative analysis of trace elements.

The negative electrode material employed in the secondary battery of the present application realizes a high loading amount of silicon nanoparticles in the negative electrode material by using the carbon-based material having the three-dimensional-network cross-linked pore structure, so that the silicon-carbon composite material has a high capacity, which can further increase the energy density of the battery.

In some embodiments, the ratio value of powder compacted density P11 g/cm$^3$ tested for the powder of the silicon-carbon composite material after single powder pressing at a force of 20,000 N to powder compacted density P21 g/cm$^3$ tested for the powder of the silicon-carbon composite material after 20 times of powder pressing at a force of 20,000 N satisfies $1.00 < P21/P11 \leq 1.20$, optionally, $1.02 \leq P21/P11 \leq 1.10$.

When the ratio value of P21/P11 satisfies the above range, the silicon-carbon composite material has relatively good compression resistance while having a relatively high specific capacity to increase a structural stability of a negative electrode film layer, so that the secondary battery containing the material has relatively good cycle performance while having a relatively high energy density.

In some embodiments, the powder compacted density P11 g/cm$^3$ tested for the powder of the silicon-carbon composite material after single powder pressing at a force of 20,000 N satisfies $1.10<P11<1.40$, optionally, $1.12 \leq P11 \leq 1.35$.

When the powder compacted density P11 g/cm$^3$ of the silicon-carbon composite material tested after single powder pressing at a force of 20000 N satisfies the above range, the negative electrode film layer has a relatively high compact density, so that the secondary battery has a relatively high energy density.

In some embodiments, the compound represented by Formula I includes one or more of Compound A-1 to Compound A-10:

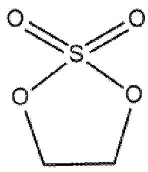 A-1 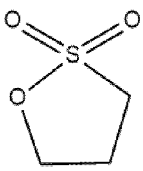 A-2 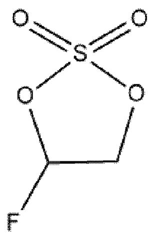 A-3 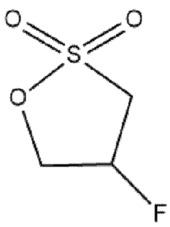 A-4

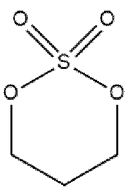 A-5 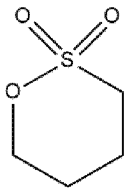 A-6 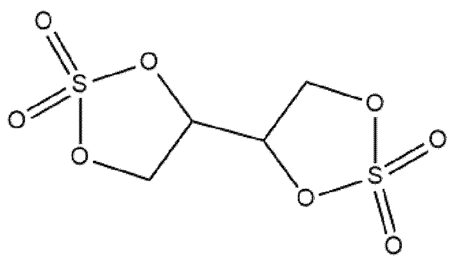 A-7

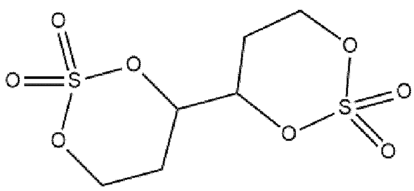 A-8 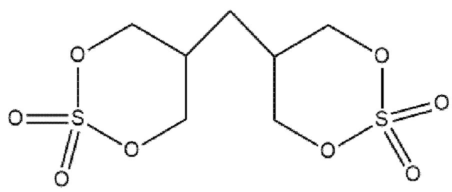 A-9

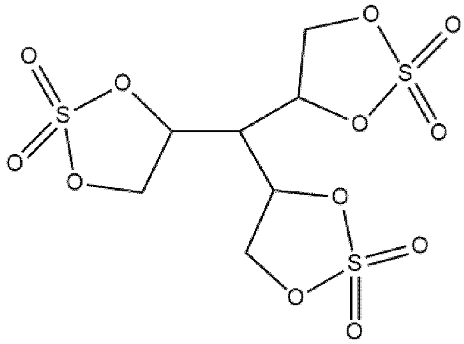

A-10.

The above compound A-1 to compound A-10 can participate in interface film formation to generate a sulfate-containing interface component, so as to increase the chemical stability and thermal stability of the interface, and construct a stable electrolyte/electrode interface, thereby increasing the cycle performance of the battery, and improving the batter for the storage performance at high temperature.

In some embodiments, the secondary battery includes the negative electrode sheet including a negative electrode current collector and a negative electrode film layer disposed on at least one surface of the negative electrode current collector. The negative electrode film layer includes a negative electrode active material.

As an example, the negative electrode current collector has two surfaces opposite in its own thickness direction, and the negative electrode film layer is disposed on either one or both of the two opposite surfaces of the negative electrode current collector.

In some embodiments, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

In some embodiments, the secondary battery includes a positive electrode sheet including a positive electrode current collector and a positive electrode film layer disposed on at least one surface of the positive electrode current collector, the positive electrode film layer including a positive electrode active material of the first aspect of the present application.

As an example, the positive electrode current collector has two surfaces opposed in its own thickness direction, and the positive electrode film layer is provided on either one or both of the two opposed surfaces of the positive electrode current collector.

In some embodiments, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some embodiments, the positive electrode active material may employ a positive electrode active material for a battery, which is known in the art. As an example, the positive electrode active material may include at least one of olivine-structured lithium-containing phosphate, lithium-transition metal oxide, and their respective modifying compounds. However, the present application is not limited to these materials, and other conventional materials that can be used as a positive electrode active material of a battery may also be used. These positive electrode active materials may be used alone or in combination of two or more thereof. Among them, examples of the lithium transition metal oxide may include, but are not limited to, at least one of lithium cobalt oxide (e.g., $LiCoO_2$), lithium nickel oxide (e.g., $LiNiO_2$), lithium manganese oxide (e.g., $LiMnO_2$ or $LiMn_2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also simply referred to as $NCM_{333}$), $LiNi_{0.5}Co_{0.2}Mn_{0.3}O_2$ (also simply referred to as $NCM_{523}$), $LiNi_{0.5}Co_{0.25}Mn_{0.25}O_2$ (also simply referred to as $NCM_{211}$), $LiNi_{0.6}Co_{0.2}Mn_{0.2}O_2$ (also simply referred to as $NCM_{622}$), $LiNi_{0.8}Co_{0.1}Mn_{0.1}O_2$ (also simply referred to as $NCM_{811}$)), lithium nickel cobalt aluminum oxide (e.g., $LiNi_{0.85}Co_{0.15}Al_{0.05}O_2$), modifying compounds thereof, and the like. Examples of the olivine-structured lithium-containing phosphate may include, but are not limited to, at least one of lithium iron phosphate (e.g., $LiFePO_4$ (which may also be simply referred to as LFP)), a composite of lithium iron phosphate and carbon, lithium manganese phosphate (e.g., $LiMnPO_4$), a composite material of lithium manganese phosphate and carbon, lithium ferro-manganese phosphate, and a composite material of lithium ferro-manganese phosphate and carbon.

In some embodiments, the positive electrode active material is a nickel-rich material, and the molar proportion of nickel element in the transition metal for the positive electrode active material is greater than 85%.

In some embodiments, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the positive electrode sheet may be prepared by dispersing the above components for preparing a positive electrode sheet, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

In some embodiments, the secondary battery further includes a separator. The type of the separator is not particularly limited in this application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which not particularly limited.

In some embodiments, the secondary battery comprises at least one of a lithium ion battery, a sodium ion battery, a magnesium ion battery, and a potassium ion battery.

In one embodiment of the present application, an electric device is provided, which includes the secondary battery of any embodiment.

The shape of the secondary battery is not limited in this application, and may be a cylindrical shape, a square shape, or any other shape. For example, FIG. 1 shows a secondary battery 1 of a square structure as an example.

In some embodiments, referring to FIG. 2, the outer package may include a housing 11 and a cover plate 13. The housing 11 may include a bottom plate and side plates connected to the bottom plate, and the bottom plate and the side plates may define an accommodating chamber. The housing 11 has an opening communicating with the accommodation chamber, and the cover plate 13 can be provided on the opening to close the accommodation chamber. The positive electrode sheet, the negative electrode sheet, and the separator may be formed into the electrode assembly 12 through a winding process or a lamination process. The electrode assembly 12 is enclosed within the accommodation chamber. The electrolyte solution is impregnated into the electrode assembly 12. There may be one or a plurality of electrode assemblies 12 included in the secondary battery 1, and the number may be selected by those skilled in the art according to specific practical requirements.

The electrical device includes the secondary battery provided by the present application. The secondary battery may be used as a power supply for the electric device, or as an energy storage unit for the electric device. The electric apparatus may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

FIG. 3 shows an electric device as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the apparatus may be a cell phone, a tablet computer, a notebook computer, or the like. The

device is generally required to be thin and lightweight, and may use a secondary battery as a power supply.

## Examples

Embodiments of the present application are described below. The embodiments described below are illustrative only and are not to be construed as limiting the present application. In the embodiments, specific techniques or conditions are not indicated, and they are performed according to techniques or conditions described in documents in the art or according to the specification of the product. The reagents or instruments used without specifying the manufacturer(s) are conventional products that are commercially available.

### I. Secondary battery

Example 1

(1) Preparation of silicon-carbon composite material

Gas containing a silicon precursor was provided to carbon substrate particles having a three-dimensional-network cross-linked pore structure; and
by the silicon precursor, silicon nanoparticles attached to the carbon substrate particles were generated by chemical vapor deposition, to obtain a silicon-carbon composite material.

(2). Preparation of a negative electrode sheet

A negative electrode active material (a silicon-oxygen composite material), conductive carbon black, sodium carboxymethyl cellulose (CMC) as a thickener, and styrene-butadiene rubber emulsion (SBR) as a binder were mixed at a weight ratio of 96.5: 1.0: 1.0: 1.5 by sufficient stirring in an appropriate amount of deionized water to form a uniform negative electrode slurry, and the slurry was applied on a negative current collector, followed by the steps such as drying to obtain a negative electrode sheet.

(3). Preparation of a positive electrode sheet

8 μm-thick aluminum foil was used as a positive electrode current collector. $LiNi_{0.8}Co_{0.1}Mn_{0.1}O_2$ ($NCM_{811}$) as a positive electrode active material, acetylene black as a conductive agent, and polyvinylidene fluoride (PVDF) as a binder were dissolved in a solvent of N-methylpyrrolidone (NMP) to obtain a positive electrode slurry after uniform mixing via sufficient stirring; and then the slurry was applied to a positive current collector, followed by drying, cold pressing, and cutting to obtain a positive electrode sheet.

(4). Preparation of an electrolyte solution

Ethylene carbonate (EC), ethyl methyl carbonate (EMC), and diethyl carbonate (DEC) were mixed at a volume ratio of 1: 1: 1 to obtain an organic solvent, and sufficiently dried lithium salt $LiPF_6$ was dissolved in the mixed organic solvent to prepare an electrolyte having a concentration of 1 mol/L. 1 wt% of compound A-1 was further added to the electrolyte and mixed uniformly.

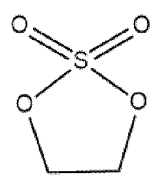

(5). Separator

A polypropylene film was used as a separator.

(6). Preparation of a battery

The positive electrode sheet, separator, and negative electrode sheet were stacked in order, so that the separator

was located between the positive electrode sheet and negative electrode sheet to have a separating effect, then wounding was made to obtain a bare cell, the bare cell was welded to a tab, and the bare cell was enclosed in an aluminum housing and baked at 80°C to remove water, followed by injection of an electrolyte and sealing to obtain an uncharged battery. The uncharged battery was further subjected to processes such as standing, hot and cold pressing, formation, shaping, and capacity testing to obtain a lithium-ion battery product of example 1.

Example 2-10

The batteries of examples 2-10 were prepared by a method similar to that of example 1, except that types of additives were adjusted, and specific parameters are shown in Table 1.

Example 11-14

The batteries of examples 11-14 were prepared by a method similar to that of example 1, except that the content of the electrolyte additive was adjusted, so that EL: SSA, EL: B1, and EL: V1 were changed, and the specific parameters are shown in Table 1.

Example 15-18

The batteries of examples 15-18 were prepared by a method similar to that of example 1, except that the deposition position of the silicon particle of the silicon-carbon composite material was adjusted to adjust the EL: B1 value, and the specific parameters are shown in Table 1.

Example 19-22

The batteries of examples 19-22 were prepared by a method similar to that of example 1, except that the pore size distribution of the silicon-carbon composite material was adjusted to adjust the EL: V1 value, and the specific parameters are shown in Table 1.

Comparative example 1

The battery of comparative example 1 was prepared by a method similar to that of example 1, except that no first component was added in the electrolyte.

Comparative example 2

The battery of comparative example 2 was prepared by a method similar to that of example 1, except that the pore structure of the carbon substrate particles of comparative example 2 was a honeycomb-like pore structure.

Comparative example 3

The battery of comparative example 3 was prepared by a method similar to that of example 2, except that the pore structure of the carbon substrate particles of comparative example 3 was a honeycomb-like pore structure.

Comparative example 4

The battery of comparative example 4 was prepared by a method similar to that of example 3, except that the pore structure of the carbon substrate particles of comparative example 4 was a honeycomb-like pore structure.

**II. Test Method**

1. A silicon-carbon composite material

1) Structural characterization of silicon-carbon composite material

The pore structure of the silicon-carbon composite can be tested using equipment and methods known in the art. For example, it can be tested by using a scanning electron microscope (e.g., ZEISS Sigma 300). As an example, the testing can be made by steps below. First, a negative electrode sheet comprising the silicon-carbon composite material is cut into

a sample to be tested of a certain size (for example, 6 mm × 6 mm), the sample to be tested is sandwiched by two electrically and thermally conductive sheets (for example, copper foil), the sample to be tested is fixedly adhered to the sheets by an adhesive (for example, a double-sided adhesive tape), pressing is performed by a flat iron block of a certain mass (for example, about 400 g) for a certain period of time (for example, 1 h) so that the gap between the sample to be tested and the copper foil is as small as possible, then the edge of the sample is trimmed by a pair of scissors, and the sample is adhered to a sample stage having an electrically conductive adhesive with the sample protruding slightly from the edge of the sample stage. The sample stage is then loaded into a sample holder and locked in place, a Cross Section Polisher (e.g., IB-19500CP) is powered on and evacuated (e.g., 10 Pa - 4 Pa) with an argon flow rate (e.g., 0.15 MPa) and a voltage (e.g., 8 KV) and polishing time (e.g., 2 h) which are set, the sample stage is set in a swing mode to begin polishing, and after polishing, an ion-polished cross-sectional topography (CP) image of the sample to be tested is obtained by a scanning electron microscope (e.g., ZEISS Sigma 300).

2) Specific surface area SSA of a silicon-carbon composite material

A specific surface area is tested by a gas adsorption method according to Test Standard GB/T 19587-2017, and specifically, the testing is as follows. After a battery is disassembled, a negative electrode is taken and scraped to obtain powder, it is subjected to high-temperature ablation to obtain a sample of a silicon-carbon composite material powder, a sample tube is submerged in liquid nitrogen at -196°C, an adsorption amount of nitrogen on a solid surface is determined under different pressures at a relative pressure of 0.05-0.30, and the sample's monolayer adsorption capacity is derived based on the BET multilayer adsorption theory and its formula, so as to calculate the specific surface area of the negative electrode active material.

The calculation formula of BET is as follows:

$$\frac{P/P_0}{n_a(1-P/P_0)} = \frac{1}{n_m C} + \frac{C-1}{n_m C} \cdot \frac{P}{P_0}$$

where $n_a$ - an amount of adsorbed gas in mol/g, $p/p_0$ - a relative pressure, nm - a monolayer adsorption amount; and C represents a revision parameter that limits the number of adsorbed layers on an adsorbent surface.

3) Pore size of a silicon-carbon composite material

A pore size is tested by a gas adsorption method, and according to test standards GB / T 19587-2017 & GB/T21650.2-2008, testing is made specifically as follows: a silicon-carbon composite material is taken as a sample, a sample tube is immersed in liquid nitrogen at -196 °C, nitrogen gas is adsorbed on the material to be tested at a relative pressure of 0-1, and a pore size distribution of a porous material is characterized based on a relational graph of volumes at different levels of pore sizes and respective partial pressures.

4) Powder compacted density

With reference to GB/T 24533-2009, an electronic pressure testing machine (e.g. UTM7305) is used for testing: certain mass G of a powder sample to be tested is placed on a special compaction mold (base area S), different pressures (20000 N or 50000 N which may be used in the application) are set, maintained for 20 s, and then removed, thicknesses H of the powder after it is compacted at the pressures are read from the device after 10 s since the pressures are removed, the compacted densities at the pressures can be obtained via calculation, and the compacted density of the material at the pressures = G/(H*S).

5) Characterization of silicon and carbon element distribution in a silicon-carbon composite material

By employing energy dispersive x-ray spectroscopy and cross-sectional ion polishing for elemental analysis, an elemental distribution of a cross-section of a particle is tested according to test standard GB-T 17359-2012.

(6) Silicon element content testing in a silicon-carbon composite material

A silicon element content is determined by emission spectrum testing (Inductively Coupled Plasma (ICP)), specifically as follows. The silicon-carbon composite material is taken as a sample, the sample is digested with aqua regia and HF, a solution digested for 15 min and a completely digested solution are taken for ICP testing, and the silicon content in a solution digested for 45 min is "the silicon content in the peripheral region of the silicon-carbon composite material",

and the difference between the silicon content in the completely digested solution and the solution digested for 1 h is "the silicon content in the central region of silicon-carbon composite".

7) Carbon element content testing in a silicon-carbon composite material

Carbon-sulfur content analysis by an infrared absorption method is based on test standard GB / T 20123 - 2006, specifically as follows. A silicon-carbon composite material is taken as a sample, the carbon content tested at 20 min is "the carbon content in the peripheral region of the silicon-carbon composite material", the difference between the carbon contents tested at 20 min and tested at the end of the test is "the carbon content in the peripheral region of the silicon-carbon composite material".

8) Testing of short diameter r for a silicon-carbon composite material

Short diameter r is determined according to a triaxial characterization method, specifically as follows. The short diameter r is determined on a planar projection drawing of a silicon-carbon composite material.

2. Battery performance

1) Cycle capacity retention rate at high temperature

At 45°C, the secondary batteries prepared in each example and comparative example are subjected to the following one charge-discharge cycle: charging at a constant current at a rate of 0.5 C to a charging cut-off voltage of 4.25 V, then charging at a constant voltage to a current ≤0.05 C and standing for 5 min, and then discharging at a constant current at a rate of 0.33 C to a discharging cut-off voltage of 2 V, and standing for 5 min. According to this method, the batteries are subjected to cyclic charge-discharge testing to calculate the capacity retention rate of the lithium-ion battery after 800 cycles.

2) Storage stability at high temperature

At 25°C, the secondary batteries prepared in each example and comparative example are subjected to the following one charge-discharge cycle: charging at a constant current at a rate of 0.5 C to a charging cutoff voltage of 4.25 V, then charging at a constant voltage until a current ≤0.05 C, standing for 5 min, discharging at a constant current at a rate of 0.33 C to a discharge cutoff voltage of 2 V, and standing for 5 min.

The batteries are then charged at a constant current at a rate of 0.5 C to a charging cutoff voltage of 4.25 V, and then charged at a constant voltage to a current < 0.05 C, and after the batteries are placed at 60°C for storage for 100 d, the batteries are subjected to cyclic charge-discharge testing according to the above method, to calculate the capacity retention rates of the lithium-ion batteries after storage for 100 d.

III. Analysis of testing results of examples and comparative examples

The secondary batteries in the examples and comparative examples are each prepared according to the above described methods, and measured for respective parameters, and the results are shown in table 1 below.

Table 1

| No. | Negative Electrode Active Material | Electrolyte Additive | EL/SSA | EL/B 1 | EL/V1 | Capacity Retention Rate after 800 Cycles | Capacity Retention Rate after storage at 60°C for 100 d |
|---|---|---|---|---|---|---|---|
| Example 1 | Three-dimensional-network Cross-linked Structure | A-1 | 0.005 | 0.01 | 5 | 54% | 35% |
| Example 2 | Three-Dimensional Network Crosslinked Structure | A-2 | 0.005 | 0.01 | 5 | 53% | 34% |

(continued)

| No. | Negative Electrode Active Material | Electrolyte Additive | EL/SSA | EL/B 1 | EL/V1 | Capacity Retention Rate after 800 Cycles | Capacity Retention Rate after storage at 60°C for 100 d |
|---|---|---|---|---|---|---|---|
| Example 3 | Three-Dimensional Network Crosslinked Structure | A-3 | 0.005 | 0.01 | 5 | 48% | 29% |
| Example 4 | Three-dimensional-network Cross-linked Structure | A-4 | 0.005 | 0.01 | 5 | 48% | 29% |
| Example 5 | Three-dimensional-network Cross-linked Structure | A-5 | 0.005 | 0.01 | 5 | 45% | 28% |
| Example 6 | Three-dimensional-network Cross-linked Structure | A-6 | 0.005 | 0.01 | 5 | 46% | 28% |
| Example 7 | Three-Dimensional Network Crosslinked Structure | A-7 | 0.005 | 0.01 | 5 | 44% | 27% |
| Example 8 | Three-dimensional-network Cross-linked Structure | A-8 | 0.005 | 0.01 | 5 | 43% | 27% |
| Example 9 | Three-dimensional-network Cross-linked Structure | A-9 | 0.005 | 0.01 | 5 | 43% | 26% |
| Example 10 | Three-Dimensional Network Crosslinked Structure | A-10 | 0.005 | 0.01 | 5 | 41% | 26% |
| Example 11 | Three-dimensional-network Cross-linked Structure | A-1 | 0.001 | 0.002 | 1 | 30% | 15% |
| Example 12 | Three-dimensional-network Cross-linked Structure | A-1 | 0.004 | 0.008 | 4 | 40% | 21% |
| Example 13 | Three-Dimensional Network Crosslinked Structure | A-1 | 0.01 | 0.02 | 10 | 41% | 20% |
| Example 14 | Three-Dimensional Network Crosslinked Structure | A-1 | 0.03 | 0.06 | 30 | 31% | 16% |

(continued)

| No. | Negative Electrode Active Material | Electrolyte Additive | EL/SSA | EL/B 1 | EL/V1 | Capacity Retention Rate after 800 Cycles | Capacity Retention Rate after storage at 60°C for 100 d |
|---|---|---|---|---|---|---|---|
| Example 15 | Three-Dimensional Network Crosslinked Structure | A-1 | 0.005 | 0.001 | 5 | 41.1% | 21% |
| Example 16 | Three-Dimensional Network Crosslinked Structure | A-1 | 0.005 | 0.005 | 5 | 52% | 33% |
| Example 17 | Three-Dimensional Network Crosslinked Structure | A-1 | 0.005 | 0.06 | 5 | 41.1% | 35% |
| Example 18 | Three-Dimensional Network Crosslinked Structure | A-1 | 0.005 | 0.1 | 5 | 40% | 22% |
| Example 19 | Three-Dimensional Network Crosslinked Structure | A-1 | 0.005 | 0.01 | 1 | 41.1% | 22% |
| Example 20 | Three-Dimensional Network Crosslinked Structure | A-1 | 0.005 | 0.01 | 30 | 42% | 21% |
| Example 21 | Three-Dimensional Network Crosslinked Structure | A-1 | 0.005 | 0.01 | 2 | 52% | 41.1% |
| Example 22 | Three-Dimensional Network Crosslinked Structure | A-1 | 0.005 | 0.01 | 15 | 49% | 30% |
| Comparative example 1 | Three-Dimensional Network Crosslinked Structure | / | / | / | / | 10% | 5% |
| Comparative example 2 | Honeycomb-like Pore Structure | A-1 | 0.005 | 0.01 | 5 | 7% | 3% |
| Comparative example 3 | Honeycomb-like Pore Structure | A-2 | 0.005 | 0.01 | 5 | 8% | 3% |
| Comparative example 4 | Honeycomb-like Pore Structure | A-3 | 0.005 | 0.01 | 5 | 6% | 2% |

As can be seen from the results in table 1, the batteries in examples 1-22 have the negative electrode active

material as the silicon-carbon composite having the three-dimensional-network cross-linked pore structure, and the electrolyte including the first component, and exhibit higher cycle capacity retention rates and more excellent storage capacity retention rates at high temperature than the batteries in comparative example 1 having the negative electrode active material as the silicon-carbon composite having the three-dimensional-network cross-linked pore structure and the electrolyte not including the first component, and the batteries in comparative examples 2-4 having the negative electrode active material as the silicon-carbon composite having a honeycomb-like pore structure and the electrolyte including the first component.

In the comparative examples, the negative electrode is the silicon carbon composite material having a honeycomb-like pore structure, silicon particles are not easily deposited inside the honeycomb-like pore structure, and therefore, in the silicon carbon composite material having the honeycomb-like pore structure, a mass content of silicon-based particles is low, only 7%, and the silicon element is mainly concentrated on the surface of the composite material, so that the expansion of the silicon based particles can be difficultly limited by the carbon substrate, leading to poor cyclic performance of the batteries.

From the comparison of examples 12-13 with examples 11 and 14, it can be seen that the ratio value EL: SSA of the specific surface area SSA of the silicon-carbon composite material to the mass ratio EL of the first component in the electrolyte which is controlled within the range of 0.0004 - 0.01 can further increase both the cycle capacity retention rates and storage capacity retention rates at high temperature of the batteries.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the implementations are also included in the scope of the present application.

## Claims

**1.** A secondary battery comprising:

a negative electrode sheet comprising a silicon-carbon composite material having a three-dimensional-network cross-linked pore structure; and
an electrolyte comprising a first component comprising a cyclic functional group containing a sulfate group or a sulfonate group.

**2.** The secondary battery according to claim 1, wherein the first component comprises at least one compounds represented by Formula I, Formula II, and Formula III,

$H\text{-}L_1$ Formula I

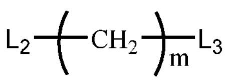
Formula II

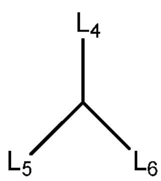
Formula III

wherein $L_1$ -$L_6$ each independently comprise

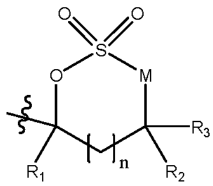 ;

m is any integer from 0 to 8, and when m is 0, L $_2$ and L $_3$ are linked by a single bond; $R_1$, $R_2$, and $R_3$ each independently comprise at least one of H, F, fluorine-substituted or unsubstituted $C_1$ - $C_{10}$, a saturated or unsaturated hydrocarbon group, a $C_6$ - $C_{60}$ aryl group, a carbonyl group, a carboxyl group, an ester group, a cyano group, a silane group, and an ether group; m includes at least one of O and C, and n is any integer from 0 to 3.

**3.** The secondary battery according to claim 1 or 2, wherein the first component comprises one or more of compound A-1 to compound A-10:

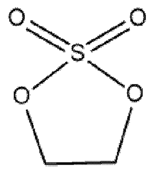 A-1 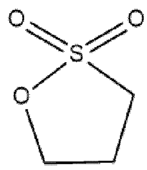 A-2 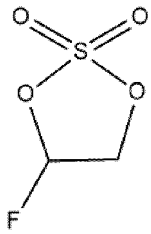 A-3 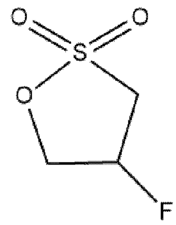 A-4

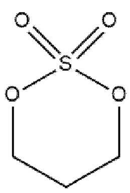 A-5 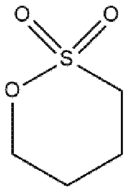 A-6 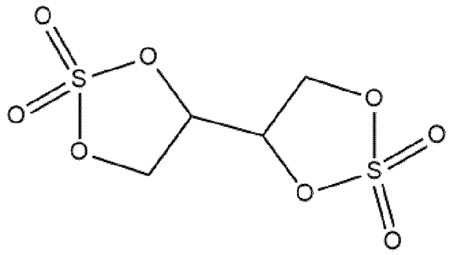 A-7

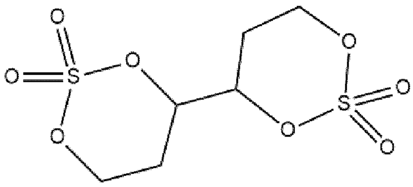 A-8 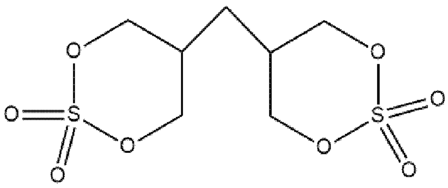 A-9

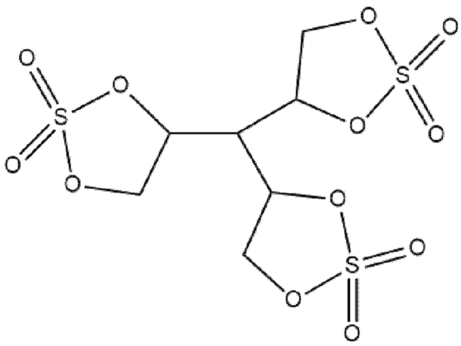 A-10.

**4.** The secondary battery according to any one of claims 1 to 3, wherein the specific surface area of the silicon-carbon composite material is SSA $m^2/g$, the mass ratio of the first component is EL g/g based on the total mass of the electrolyte, and EL: SSA is 0.001 - 0.03, preferably 0.004 - 0.01.

5. The secondary battery according to any one of claims 1 to 4, wherein

the mass ratio of the first component is EL g/g based on the total mass of the electrolyte, and
the mass percentage content of the silicon element in the silicon-carbon composite material is B1 based on the total mass of the silicon-carbon composite material in the peripheral region of the silicon-carbon composite material, wherein the peripheral region of the silicon-carbon composite material is a region extending from the outer surface of the silicon-carbon composite material to the inside of the silicon-carbon composite material by a distance within r/2, r representing the short diameter of the silicon-carbon composite material, and
EL: B1 is 0.001 - 0.1, preferably 0.005 - 0.06.

6. The secondary battery according to any one of claims 1 to 5, wherein the total pore volume of pores having a pore diameter more than 100 nm in the silicon-carbon composite material is V1 $cm^3$/ g, and the ratio EL: V1 of the mass ratio EL of the first component in the electrolyte to the total pore volume V1 of pores having a pore diameter more than 100 nm in the silicon-carbon composite material is1 - 30, optionally2 - 15.

7. The secondary battery according to claim 5 or 6, wherein in the peripheral region of the silicon-carbon composite material, the mass percentage content A1 of the carbon element of the silicon-carbon composite material and the mass percentage content B1 of the silicon element of the silicon-carbon composite material satisfy $0.8 \leq B1/A1 \leq 2.5$, optionally, $1 \leq B1/A1 \leq 1.5$ based on the total mass of the silicon-carbon composite material.

8. The secondary battery according to any one of claims 1 to 7, wherein the mass percentage content A of the carbon element of the silicon-carbon composite material based on the total mass of the silicon-carbon composite material has a tendency to decrease in a direction from a geometric center of the silicon-carbon composite material toward an outer surface of the silicon-carbon composite material, and the mass percentage B of the silicon element of the silicon-carbon composite material based on the total mass of the silicon-carbon composite material has a tendency to increase in a direction from the geometric center of the silicon-carbon composite material toward the outer surface of the silicon-carbon composite material.

9. The secondary battery according to any one of claims 1 to 8, wherein
the specific surface area SSA of the silicon-carbon composite material satisfies: $2\ m^2/g \leq SSA \leq 10\ m^2/g$; optionally, $3\ m^2/g \leq SSA \leq 7\ m^2/g$.

10. The secondary battery according to any one of claims 1 to 9, wherein the silicon-carbon composite material includes carbon substrate particles including a three-dimensional-network cross-linked pore structure, and silicon nanoparticles, at least a part of which is disposed in the three-dimensional-network cross-linked pore structure.

11. The secondary battery according to claim 10, wherein the silicon nanoparticles comprise one or more of silicon oxide compounds, pre-lithiated silicon oxide compounds, amorphous silicon, crystalline silicon and silicon-carbon composites, optionally amorphous silicon.

12. The secondary battery according to claim 10 or 11, wherein the carbon substrate includes one or more of graphite, soft carbon, and hard carbon.

13. The secondary battery according to any one of claims 10 to 12, wherein the mass ratio of the silicon nanoparticles is 40% or more, optionally 40 - 60% in the silicon-carbon composite material.

14. The secondary battery according to any one of claims 1 to 13, wherein the ratio of powder compacted density P11 $g/cm^3$ tested for the powder of the silicon-carbon composite material after single powder pressing at a force of 20,000 N to powder compacted density P21 $g/cm^3$ tested for the powder of the silicon-carbon composite material after 20 times of powder pressing at a force of 20,000 N satisfies $1.00 < P21/P11 \leq 1.20$, optionally, $1.02 \leq P21/P11 \leq 1.10$.

15. The secondary battery according to any one of claims 1 to 14, wherein the powder compacted density P11 $g/cm^3$ tested for the powder of the silicon-carbon composite material after single powder pressing at a force of 20,000 N satisfies $1.10 < P11 < 1.40$, optionally, $1.12 < P11 < 1.35$.

16. The secondary battery according to any one of claims 1 to 15, wherein the secondary battery includes at least one of a lithium ion battery, a sodium ion battery, a magnesium ion battery, and a potassium ion battery.

**17.** An electrical device comprising the secondary battery according to any one of claims 1-16.

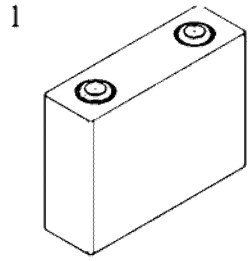


FIG. 1

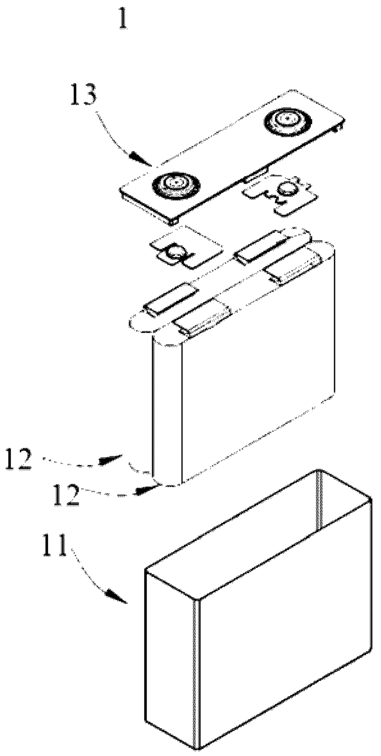


FIG. 2

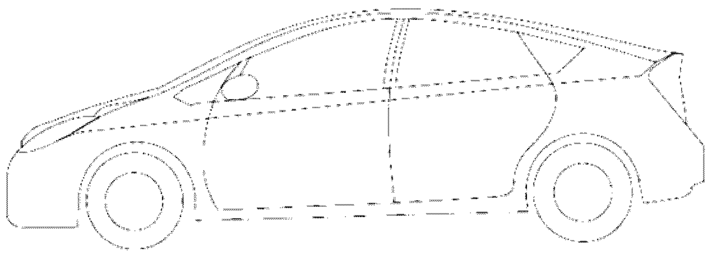

FIG. 3

**INTERNATIONAL SEARCH REPORT**

International application No.
**PCT/CN2023/085672**

**A. CLASSIFICATION OF SUBJECT MATTER**

H01M10/0567(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 硅, 碳, 炭, 石墨, 孔, 网络, 硫酸酯, 磺酸酯, silicon, carbon, Si, C, graphite, hole, net, sulfate, sulfonate

**C. DOCUMENTS CONSIDERED TO BE RELEVANT**

| Category* | Citation of document, with indication, where appropriate, of the relevant passages | Relevant to claim No. |
|---|---|---|
| Y | CN 110336076 A (DONGGUAN DONGYANG GUANGKE RESEARCH & DEVELOPMENT CO., LTD.) 15 October 2019 (2019-10-15)<br>description, paragraphs 6-103 | 1-5, 7-17 |
| Y | WO 2022198804 A1 (GUANGDONG KAIJIN NEW ENERGY TECHNOLOGY CO., LTD.) 29 September 2022 (2022-09-29)<br>description, paragraphs 5-78 | 1-5, 7-17 |
| Y | CN 108242557 A (NINGDE CONTEMPORARY AMPEREX TECHNOLOGY CO., LTD.) 03 July 2018 (2018-07-03)<br>description, paragraphs 4-40 | 1-5, 7-17 |
| Y | WO 2022042373 A1 (SHENZHEN CAPCHEM TECHNOLOGY CO., LTD.) 03 March 2022 (2022-03-03)<br>description, page 5, last paragraph-page 11, paragraph 3 | 2, 3 |
| Y | JP 2015088261 A (SAMSUNG SDI CO., LTD.) 07 May 2015 (2015-05-07)<br>description, paragraphs 8-132 | 1-5, 7-17 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 July 2023** | **25 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
PCT/CN2023/085672

C. DOCUMENTS CONSIDERED TO BE RELEVANT

| Category* | Citation of document, with indication, where appropriate, of the relevant passages | Relevant to claim No. |
|---|---|---|
| A | WO 2022143188 A1 (SHENZHEN CAPCHEM TECHNOLOGY CO., LTD.) 07 July 2022 (2022-07-07) entire document | 1-17 |

Form PCT/ISA/210 (second sheet) (July 2022)

**INTERNATIONAL SEARCH REPORT**
**Information on patent family members**

International application No.
**PCT/CN2023/085672**

| Patent document cited in search report | | | Publication date (day/month/year) | Patent family member(s) | | | Publication date (day/month/year) |
|---|---|---|---|---|---|---|---|
| CN | 110336076 | A | 15 October 2019 | CN | 110336076 | B | 06 August 2021 |
| WO | 2022198804 | A1 | 29 September 2022 | US | 2022310989 | A1 | 29 September 2022 |
| | | | | DE | 102022102273 | A1 | 29 September 2022 |
| | | | | KR | 20220134738 | A | 05 October 2022 |
| | | | | CN | 113078318 | A | 06 July 2021 |
| CN | 108242557 | A | 03 July 2018 | WO | 2018120792 | A1 | 05 July 2018 |
| | | | | CN | 108242557 | B | 28 August 2020 |
| WO | 2022042373 | A1 | 03 March 2022 | WO | 2022042373 | A8 | 21 April 2022 |
| | | | | CN | 114122491 | A | 01 March 2022 |
| JP | 2015088261 | A | 07 May 2015 | JP | 6445758 | B2 | 26 December 2018 |
| | | | | US | 10587006 | B2 | 10 March 2020 |
| | | | | KR | 102272267 | B1 | 02 July 2021 |
| | | | | JP | 2015109235 | A | 11 June 2015 |
| | | | | KR | 20150050328 | A | 08 May 2015 |
| | | | | US | 2015118581 | A1 | 30 April 2015 |
| WO | 2022143188 | A1 | 07 July 2022 | CN | 114695869 | A | 01 July 2022 |

Form PCT/ISA/210 (patent family annex) (July 2022)